# EUROPEAN PATENT SPECIFICATION

(11) **EP 4 431 331 B1**
(45) Date of publication and mention of the grant of the patent: **04.03.2026**
(21) Application number: 22889475.4
(22) Date of filing: 08.11.2022
(51) Int. Cl.: B60L 3/04, B60R 16/023

(54) **HIGH-VOLTAGE DISTRIBUTION BOX HAVING OPEN CIRCUIT TRIGGER, COLLISION INITIATION SYSTEM, AND ELECTRIC VEHICLE**
HOCHSPANNUNGSVERTEILERKASTEN MIT LEERLAUFAUSLÖSER, KOLLISIONSAUSLÖSESYSTEM UND ELEKTROFAHRZEUG
BOÎTE DE DISTRIBUTION À HAUTE TENSION PRÉSENTANT UN DÉCLENCHEUR DE CIRCUIT OUVERT, SYSTÈME D'INITIATION DE COLLISION ET VÉHICULE ÉLECTRIQUE

(30) Priority: 08.11.2021 CN 202122718858 U
(43) Date of publication of application: 18.09.2024
(73) Proprietor: Changchun Jetty Automotive Technology Co., Ltd., Changchun City, Jilin Province 130000 (CN)
(72) Inventor: WANG, Chao, Changchun, Jilin 130000 (CN)
(74) Representative: Habermann, Hruschka & Schnabel
(86) International application number: PCT/CN2022/130508
(87) International publication number: WO 2023/078454

(56) References cited:
- CN-A- 103 187 769
- CN-A- 104 890 518
- CN-A- 105 329 190
- CN-U- 202 480 896
- CN-U- 202 480 896
- CN-U- 212 555 839
- CN-U- 212 555 839
- CN-U- 216 069 622
- JP-A- H0 986 337
- JP-A- H11 301 393
- US-A1- 2017 368 941

## Description

### RELATED APPLICATIONS

The present disclosure claims priority to Chinese Patent Application No. 202122718858.X, filed on November 8, 2021 and entitled "HIGH-VOLTAGE DISTRIBUTION BOX HAVING OPEN CIRCUIT TRIGGER, COLLISION INITIATION SYSTEM, AND ELECTRIC VEHICLE".

### TECHNICAL FIELD

The present disclosure relates to the field of electric vehicles, and in particular to a high-voltage distribution box having an open circuit trigger, a collision initiation system, and an electric vehicle.

### BACKGROUND

With the rapid development of the new energy industry, the number of electric vehicles is also increasing continuously. Massive electric vehicles meanwhile pose a huge safety hazard. The most critical is to timely disconnect the high-voltage loop of the electric vehicle when it experiences a collision, thus ensuring the safety both of the occupants and peripheral ambulance personnel.

The current measure being taken is that, upon collision, the airbag module sends out a power-off signal, which drives the relevant modules through a network or a hard wire to disconnect the main positive relay and main negative relay of the electric vehicle, so that the high-voltage system of the entire vehicle is powered down. If a relevant module, a circuit, or an actuator fails, the high-voltage loop of the electric vehicle cannot be disconnected in time, leading to injury or fatality caused by electric shock. A multipoint emergency responder safety isolation system is known from the prior art, for example from US2017/368941A1. A circuit breaker and electric vehicle are known from the prior art, for example from CN212555839U.

How to promptly disconnect the high-voltage loop of the entire vehicle after a collision of the electric vehicle is a problem to be resolved urgently in the prior art.

### SUMMARY

The present invention is defined by the independent claim 1. Further embodiments are set forth in the dependent claims 2-7. Any references to inventions or embodiments not falling within the scope of the independent claim are to be interpreted as examples useful for understanding the invention. An objective of the present disclosure is to provide a high-voltage distribution box having an open circuit trigger, a collision initiation system, and an electric vehicle, such that when the electric vehicle experiences a collision, the high-voltage loop of the entire vehicle is disconnected immediately to reduce human casualties.

According to the embodiments of the present disclosure, when the electric vehicle experiences a collision, the control line of the electric vehicle sends an initiation control signal for initiating the open circuit trigger to the low-voltage connector. Upon receipt of the initiation control signal, the open circuit trigger immediately disconnects the series connection of the first high-voltage connector and the second high-voltage connector in the high-voltage distribution box, so as to disconnect the high-voltage loop of the electric vehicle which is connected to both of the first high-voltage connector and the second high-voltage connector, so that the high-voltage system of the entire vehicle is powered down, thereby reducing economic loss due to the collision of the electric vehicle and human casualties.

### BRIEF DESCRIPTION OF THE DRAWINGS

To describe the technical solutions in the embodiments of the present disclosure and the prior art more clearly, the drawings to be used in the description of the embodiments or the prior art will be briefly described below. Obviously, the drawings in the following description show only some embodiments of the present disclosure, and persons of ordinary skill in the art may still obtain other drawings from these drawings without inventive efforts.
FIG. 1a is a schematic structural diagram of a high-voltage distribution box having an open circuit trigger according to an embodiment of the present disclosure.
FIG. 1b is a schematic structural diagram of a high-voltage distribution box having an open circuit trigger according to an embodiment of the present disclosure.
FIG. 2 is a specific structural diagram of a high-voltage distribution box having an open circuit trigger according to an embodiment of the present disclosure.
FIG. 3 is a schematic structural diagram of an open circuit trigger according to an embodiment of the present disclosure.
FIG. 4 is a schematic structural diagram of a collision initiation system according to an embodiment of the present disclosure.
FIG. 5 is a schematic structural diagram of an electric automobile according to an embodiment of the present disclosure.

### [Reference Numerals]

101. distribution box housing
102. first high-voltage connector
103. second high-voltage connector
104. low-voltage connector
105. main positive open circuit trigger
106. main negative open circuit trigger
107. first positive electricity connection terminal
108. first negative electricity connection terminal
109. second positive electricity connection terminal
110. second negative electricity connection terminal
111. open circuit trigger
201. distribution-box lower housing
202. distribution-box upper cover
203. first high-voltage connector
204. second high-voltage connector
205. low-voltage connector
206. main positive open circuit trigger
207. main negative open circuit trigger
208. open circuit trigger control wire
209. main positive copper busbar
210. main negative copper busbar
211. first positive electricity connection terminal
212. first negative electricity connection terminal
213. second positive electricity connection terminal
214. second negative electricity connection terminal
215. high-voltage repeater
216. high-voltage repeater control wire
217. high-voltage circuit breaker
218. fixing bolt
219. insulation fixing block
301. connecting pin
302. trigger
303. trigger resistor
304. expansion component
305. open circuit trigger control wire
306. first end of the open circuit trigger
307. second end of the open circuit trigger
401. high-voltage battery
402. airbag ECU
403. collision sensor
404. airbag initiator
405. high-voltage distribution box
406. high-voltage appliance
407. open circuit trigger
408. left front collision sensor
409. right front collision sensor
410. left side collision sensor
411. right side collision sensor
412. forward collision sensor
413. driver airbag initiator
414. driver side airbag initiator
415. passenger airbag initiator
416. passenger side airbag initiator
501. right front collision sensor
502. left front collision sensor
503. right side collision sensor
504. left side collision sensor
505. passenger airbag initiator
506. driver airbag initiator
507. passenger side airbag initiator
508. driver side airbag initiator
509. high-voltage battery
510. airbag ECU
511. high-voltage distribution box
512. automobile body

### DESCRIPTION OF THE EMBODIMENTS

The following clearly and completely describes the technical solutions in the embodiments of the present disclosure with reference to the drawings in the embodiments of the present disclosure. Obviously, the described embodiments are only some rather than all of the embodiments of the present disclosure.

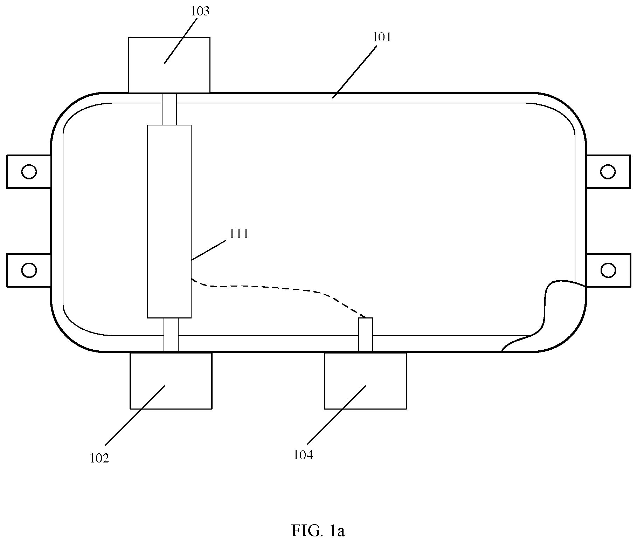

FIG. 1a is a schematic structural diagram of a high-voltage distribution box having an open circuit trigger according to an embodiment of the present disclosure. The high-voltage distribution box having an open circuit trigger shown therein includes a distribution box housing 101, a first high-voltage connector 102, a second high-voltage connector 103, a low-voltage connector 104, and an open circuit trigger 111.

The first high-voltage connector 102, the second high-voltage connector 103, and the low-voltage connector 104 are provided on a surface of the distribution box housing 101, and the open circuit trigger 111 is provided inside the distribution box housing 101.

The first high-voltage connector 102 and the second high-voltage connector 103 are connected to a high-voltage loop of an electric vehicle (for example, an electric automobile, where electric vehicles in the embodiments described below are all referred to as electric automobiles, but it does not exclude that other electric vehicles also use the structure of the present disclosure as a high-voltage distribution box), and the first high-voltage connector 102 and the second high-voltage connector 103 are connected in series via the open circuit trigger 111.

The low-voltage connector 104 is connected to a control line of the electric automobile and configured to send an initiation control signal to the open circuit trigger 111 at a moment of collision.

A high-voltage battery of the electric automobile is connected to a high-voltage appliance (for example, a motor) of an electric automobile via the high-voltage distribution box as shown in FIG. 1a, where a current output terminal of the high-voltage battery is connected to the first high-voltage connector 102, and a power supply wire of the high-voltage appliance is connected to the second high-voltage connector 103.

During normal operation of the electric automobile, current of the high-voltage battery sequentially passes through the first high-voltage connector 102, the open circuit trigger 111, and the second high-voltage connector 103 to the high-voltage appliance.

When the electric automobile experiences a collision, a control system of the electric automobile sends an initiation control signal to the open circuit trigger 111 via a control line of the electric automobile. The low-voltage connector 104 is connected to the control line of the electric automobile and sends the initiation control signal to the open circuit trigger 111. After receiving the initiation control signal, the open circuit trigger 111 immediately disconnects the series connection of the first high-voltage connector 102 and the second high-voltage connector 103, thus disconnecting the high-voltage battery of the electric automobile from the high-voltage appliance, so that the high-voltage loop of the electric automobile is powered down.

With the use of the high-voltage distribution box having the open circuit trigger of the embodiments of the present disclosure, when the electric automobile experiences a collision, the high-voltage loop of the electric automobile is disconnected immediately to power down the high-voltage system of the entire vehicle, reducing economic loss due to the collision of the electric automobile and human casualties.

In addition, the current output terminal of the high-voltage battery may be also connected to the second high-voltage connector 103, and the power supply wire of the high-voltage appliance is connected to the first high-voltage connector 102. It is easy for those of ordinary skills to think of the operation process of the high-voltage distribution box with such connection method based on content of the foregoing embodiments, and details are not repeated in the embodiments of this specification.

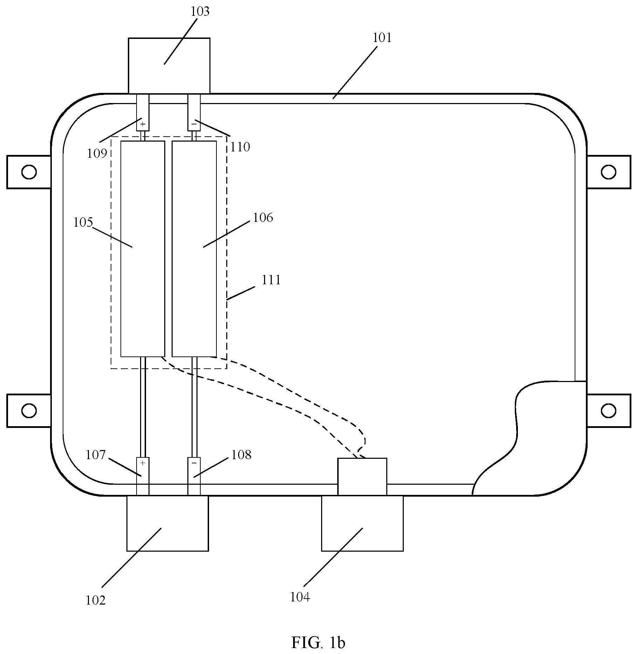

In an embodiment of the present disclosure, to further ensure the safety of the positive and negative high-voltage loops when the electric automobile experiences a collision, as shown in FIG. 1b, the first high-voltage connector 102 includes a first positive electricity connection terminal 107 and a first negative electricity connection terminal 108, the second high-voltage connector 103 includes a second positive electricity connection terminal 109 and a second negative electricity connection terminal 110, and the open circuit trigger 111 further includes a main positive open circuit trigger 105 and a main negative open circuit trigger 106.

The main positive open circuit trigger 105 is connected in series between the first positive electricity connection terminal 107 and the second positive electricity connection terminal 109, and the main negative open circuit trigger 106 is connected in series between the first negative electricity connection terminal 108 and the second negative electricity connection terminal 110.

In the embodiments of the present disclosure, a positive electrode of the high-voltage battery is connected to the first positive electricity connection terminal 107, a negative electrode of the high-voltage battery is connected to the first negative electricity connection terminal 108, the second positive electricity connection terminal 109 is connected to a positive electrode of the high-voltage appliance, and the second negative electricity connection terminal 110 is connected to a negative electrode of the high-voltage appliance.

During normal operation of the electric automobile, the positive electrode of the high-voltage battery outputs a current of a positive loop to the first positive electricity connection terminal 107, the current sequentially passing through the open circuit trigger 111 and the second positive electricity connection terminal 109 to arrive at the positive electrode of the high-voltage appliance, and then the high-voltage appliance outputs a current of a negative loop to the second negative electricity connection terminal 110, the current sequentially passing through the open circuit trigger 111 and the first negative electricity connection terminal 108 to arrive at the negative electrode of the high-voltage battery.

In the embodiments of the present disclosure, during normal operation of the electric automobile, the positive electrode of the high-voltage battery outputs a current of a positive loop to the first positive electricity connection terminal 107, the current sequentially passing through the main positive open circuit trigger 105 and the second positive electricity connection terminal 109 to arrive at the positive electrode of the high-voltage appliance, and then the high-voltage appliance outputs a current of a negative loop to the second negative electricity connection terminal 110, the current passing through the main negative open circuit trigger 106 and the first negative electricity connection terminal 108 to arrive at the negative electrode of the high-voltage battery.

When the electric automobile experiences a collision, the control system of the electric automobile sends an initiation control signal to both of the main positive open circuit trigger 105 and the main negative open circuit trigger 106 via the control line of the electric automobile. The low-voltage connector 104 is connected to the control line of the electric automobile and sends the initiation control signal to both of the main positive open circuit trigger 105 and the main negative open circuit trigger 106. Upon receipt of the initiation control signal, the main positive open circuit trigger 105 immediately disconnects the series connection of the first positive electricity connection terminal 107 and the second positive electricity connection terminal 109. Upon receipt of the initiation control signal, the main negative open circuit trigger 106 immediately disconnects the series connection of the first negative electricity connection terminal 108 and the second negative electricity connection terminal 110, thus disconnecting the positive electrode of the high-voltage battery from the positive electrode of the high-voltage appliance and disconnecting the negative electrode of the high-voltage battery from the negative electrode of the high-voltage appliance, so that the positive and negative high-voltage loops of the electric automobile are powered down.

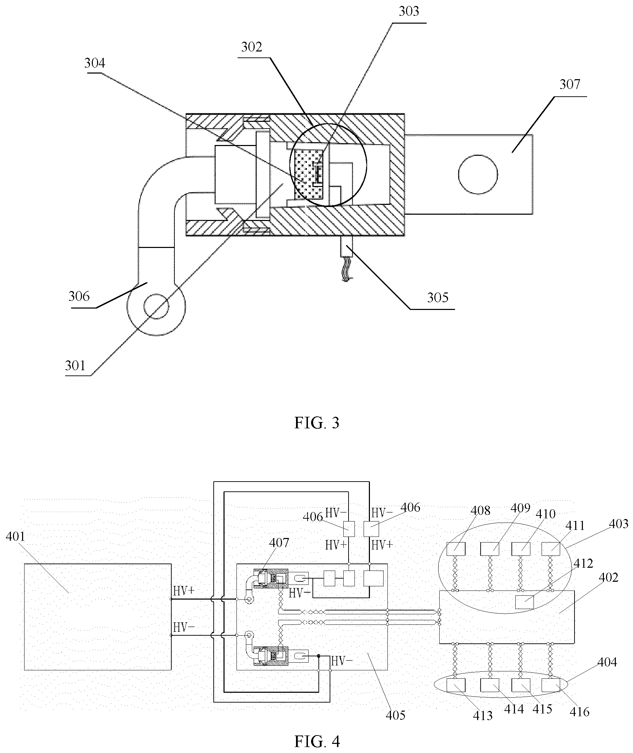

According to the invention, as shown in FIG. 3, the open circuit trigger 111 further includes a connecting pin 301 and a trigger 302, and the connecting pin 301 is movably connected between a first end 306 of the open circuit trigger and a second end 307 thereof.

The trigger 302 is provided at an end of the connecting pin 301 and connected to the low-voltage connector 104 and receives the initiation control signal.

In the embodiments of the present disclosure, the first end 306 of the open circuit trigger is connected to the first high-voltage connector 102, and the second end 307 of the open circuit trigger is connected to the second high-voltage connector 103. When the electric automobile malfunctions, the trigger 302 receives the initiation control signal, enabling the connecting pin 301 to disconnect the connection between the first end 306 of the open circuit trigger and the second end 307 of the open circuit trigger, thus disconnecting the series connection of the first high-voltage connector 102 and the second high-voltage connector 103, so that the high-voltage of the entire vehicle is powered down.

According to the invention, as shown in FIG. 3, the trigger 302 further includes a trigger resistor 303 and an expansion component 304, the trigger resistor 303 is connected to the low-voltage connector 104, and the expansion component 304 is provided at an end of the connecting pin 301.

The trigger resistor 303 is configured to, upon receipt of the initiation control signal, control the expansion component 304 to swell and deform to enable the connecting pin 301 to disconnect the connection between the first end 306 of the open circuit trigger and the second end 307 of the open circuit trigger.

According to the invention, the expansion component 304 is a gas generator. Exemplarily, the expansion component 304 described in the non-claimed embodiments of the present disclosure is an explosive. When the expansion component 304 is an explosive, after receiving the initiation control signal, the trigger resistor 303 rapidly heats up and ignites the explosive to enable the explosive to blast the connecting pin 301, so as to disconnect the connection between the first end 306 of the open circuit trigger and the second end 307 of the open circuit trigger. When the expansion component 304 is a gas generator, upon receipt of the initiation control signal, the trigger resistor 303 rapidly heats up and causes the gas generator to swell and deform to enable the connecting pin 301 to disconnect the connection between the first end 306 of the open circuit trigger and the second end 307 of the open circuit trigger.

In the embodiments of the present disclosure, as shown in FIG. 3, the open circuit trigger 111 may further include an open circuit trigger control wire 305 connected in series between the trigger resistor 303 and the first low-voltage connector 104 and configured to transmit the initiation control signal to the trigger resistor 303.

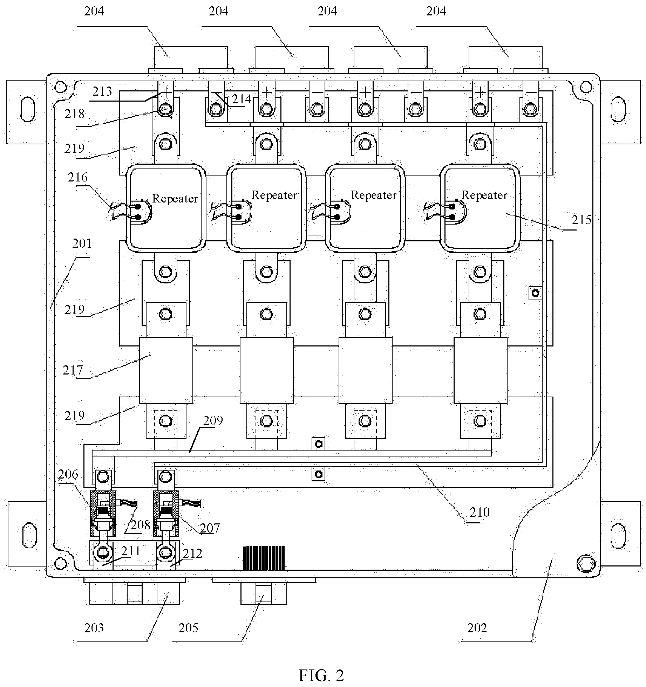

In an embodiment of the present disclosure, as shown in FIG. 2, the distribution box housing 101 further includes a distribution-box lower housing 201 and a distribution-box upper cover 202. The distribution-box lower housing 201 may be connected to the distribution-box upper cover 202 through a bolt. The open circuit trigger 111 shown in FIG. 1a or FIG. 1b is provided inside an enclosed space formed by the distribution-box lower housing 201 and the distribution-box upper cover 202. The distribution-box lower housing 201 may be further connected to the distribution-box upper cover 202 in another connection manner, which is not limited in the embodiments of this specification.

In an embodiment of the present disclosure, to control power supply or power cut-off of the high-voltage appliance using the high-voltage distribution box in the embodiments of the present disclosure when the electric automobile is in a normal operation state, as shown in FIG. 2, the high-voltage distribution box further includes a high-voltage repeater 215 provided inside an enclosed space formed by the distribution-box lower housing 201 and the distribution-box upper cover 202.

The high-voltage repeater 215 and the main positive open circuit trigger 206 are connected in series between the first high-voltage connector 203 and the second high-voltage connector 204.

The low-voltage connector 205 is further configured to, in a normal operation state, receive a control signal sent to the high-voltage repeater 215.

In the embodiments of the present disclosure, the connection order of the first high-voltage connector 203, the second high-voltage connector 204, the high-voltage repeater 215, and the open circuit trigger may be from the first high-voltage connector 203 to the main positive open circuit trigger 206, the high-voltage repeater 215, and then to the second high-voltage connector 204. The order of the high-voltage repeater 215 and the open circuit trigger may be exchanged.

In a normal operation state, a high-voltage battery electronic control unit (ECU) of the electric automobile sends, based on an operation situation of the electric automobile, a control signal to the high-voltage repeater 215 via the control line of the electric automobile. The low-voltage connector 205 is connected to the control line of the electric automobile and sends the control signal of the high-voltage repeater 215 to the high-voltage repeater 215. After receiving the control signal, the high-voltage repeater 215 disconnects the series connection of the first high-voltage connector 203 and the second high-voltage connector 204, thus disconnecting the high-voltage battery of the electric automobile from the high-voltage appliance.

As shown in FIG. 2, the open circuit trigger 111 further includes a main positive open circuit trigger 206 and a main negative open circuit trigger 207. Exemplarily, the high-voltage repeater 215 and the main positive open circuit trigger 206 are connected in series between the first positive electricity connection terminal 211 of the first high-voltage connector 203 and the second positive electricity connection terminal 213 of the second high-voltage connector 204. After receiving the control signal, the high-voltage repeater 215 disconnects the series connection of the first positive electricity connection terminal 211 and the second positive electricity connection terminal 213, thus disconnecting the positive high-voltage loop of the electric automobile.

As shown in FIG. 2, the high-voltage distribution box may include a plurality of second high-voltage connectors 204, each second high-voltage connector 204 being connected to a different high-voltage appliance. In addition, based on the quantity of the second high-voltage connectors 204, the high-voltage distribution box may include a plurality of high-voltage repeaters 215, and the high-voltage repeaters 215 are in one-to-one correspondence to the second high-voltage connectors 204. The high-voltage battery ECU of the electric automobile can control each high-voltage repeater 215, so as to control power supply or power cut-off of different high-voltage appliances.

In an embodiment of the present disclosure, as shown in FIG. 2, the high-voltage distribution box may further include a high-voltage repeater control wire 216, and the high-voltage repeater control wire 216 has one end connected to the high-voltage repeater 215 and the other end connected to the low-voltage connector 205, for transmitting the control signal of the high-voltage repeater 215 from the low-voltage connector 205 to the high-voltage repeater 215.

In an embodiment of the present disclosure, when the high-voltage loop of the electric automobile experiences a short circuit or the high-voltage appliance has an excess load, to protect the high-voltage loop of the electric automobile using the high-voltage distribution box, as shown in FIG. 2, the high-voltage distribution box may further include a high-voltage circuit breaker 217 provided inside an enclosed space formed by the distribution-box lower housing 201 and the distribution-box upper cover 202.

The high-voltage circuit breaker 217 and the main positive open circuit trigger 206 are connected in series between the first high-voltage connector 203 and the second high-voltage connector 204.

The high-voltage circuit breaker 217 is configured to disconnect the series connection of the first high-voltage connector 203 and the second high-voltage connector 204 in a case of a short circuit in the high-voltage loop of the electric automobile or an excess load of the electric automobile.

In the embodiments of the present disclosure, the first high-voltage connector 203, the second high-voltage connector 204, the high-voltage circuit breaker 217, and the main positive open circuit trigger 206 are connected in the same order of the high-voltage repeater 215 of the embodiments of the present disclosure, and thus details are not described in the embodiments of the present disclosure.

When the high-voltage loop of the electric automobile is prone to a short circuit or the high-voltage appliance has an excess load, the high-voltage circuit breaker 217 disconnects the series connection of the first high-voltage connector 203 and the second high-voltage connector 204, thus disconnecting the high-voltage loop and protecting the high-voltage loop of the electric automobile.

As shown in FIG. 2, the open circuit trigger 111 includes a main positive open circuit trigger 206 and a main negative open circuit trigger 207. Exemplarily, the high-voltage circuit breaker 217 and the main positive open circuit trigger 206 are connected in series between the first positive electricity connection terminal 211 of the first high-voltage connector 203 and the second positive electricity connection terminal 213 of the second high-voltage connector 204. When the high-voltage loop of the electric automobile is prone to a short circuit or the high-voltage appliance has an excess load, the high-voltage circuit breaker 217 disconnects the series connection of the first positive electricity connection terminal 211 and the second positive electricity connection terminal 213, thus disconnecting the positive high-voltage loop of the electric automobile.

As shown in FIG. 2, the high-voltage distribution box may include a plurality of high-voltage circuit breakers 217, and the high-voltage circuit breakers 217 are in one-to-one correspondence to the second high-voltage connectors 204, such that when one high-voltage appliance is prone to a short circuit or has an excess load, the series connection of the second high-voltage connector 204 connected to the high-voltage appliance and the first high-voltage connector 203 is disconnected separately, thus ensuring the normal operation of the other high-voltage appliances that have not been prone to a short circuit or an excess load.

In an embodiment of the present disclosure, to increase the maximum current conducted by the high-voltage distribution box, as shown in FIG. 2, the high-voltage distribution box may further include a copper busbar (a main positive copper busbar 209 and a main negative copper busbar 210) and an insulation fixing block 219. The main positive copper busbar 209, the main negative copper busbar 210, and the insulation fixing block 219 are provided in an enclosed space formed by the distribution-box lower housing 201 and the distribution-box upper cover 202.

The main positive copper busbar 209 and the main positive open circuit trigger 206 are connected in series between the first high-voltage connector 203 and the second high-voltage connector 204 (the main negative copper busbar 210 and the main negative open circuit trigger 207 are connected in series between the first high-voltage connector 203 and the second high-voltage connector 204), to conduct a high-voltage current between the first high-voltage connector 203 and the second high-voltage connector 204 inside the distribution box housing.

The insulation fixing block 219 wraps the main positive copper busbar 209 or the main negative copper busbar 210, to fix the copper busbar inside the distribution box housing.

In the embodiments of the present disclosure, due to a large cross-sectional area of the main positive copper busbar 209 or the main negative copper busbar 210, a larger current can be conducted. In addition, the main positive copper busbar 209 or the main negative copper busbar 210 is exposed in the high-voltage distribution box, to prevent a plurality of main positive copper busbars 209 and/or main negative copper busbars 210 from causing a short circuit, the insulation fixing block 219 wraps the main positive copper busbar 209 or the main negative copper busbar 210 and fixes the main positive copper busbar 209 and the main negative copper busbar 210 inside the distribution box housing.

As shown in FIG. 2, the high-voltage distribution box may include a plurality of main positive copper busbars 209, main negative copper busbars 210, and insulation fixing blocks 219. Each copper busbar is connected to the open circuit trigger, the first high-voltage connector 203, and the second high-voltage connector 204 in series. Fixing bolts 218 may be used to connect the main positive copper busbar 209 to the main positive open circuit trigger, and may be used to connect the main negative copper busbar 210 to the second high-voltage connector 204 or both of the main negative open circuit trigger 207 and the first high-voltage connector 203.

As shown in FIG. 2, the open circuit trigger 111 further includes the main positive open circuit trigger 206 and the main negative open circuit trigger 207. Exemplarily, the copper busbar further includes a main positive copper busbar 209 and a main negative copper busbar 210. The main positive copper busbar 209 and the main positive open circuit trigger 206 are connected in series between the first positive electricity connection terminal 211 of the first high-voltage connector 203 and the second positive electricity connection terminal 213 of the second high-voltage connector 204, and the main negative copper busbar 210 and the main negative open circuit trigger 207 are connected in series between the first negative electricity connection terminal 212 of the first high-voltage connector 203 and the second negative electricity connection terminal 214 of the second high-voltage connector 204. The main positive copper busbar 209 conducts a positive high-voltage current between the first positive electricity connection terminal 211 and the second positive electricity connection terminal 213 inside the distribution box housing, and the main negative copper busbar 210 conducts a negative high-voltage current between the first negative electricity connection terminal 212 and the second negative electricity connection terminal 214 inside the distribution box housing.

In an embodiment of the present disclosure, as shown in FIG. 2, the high-voltage distribution box may further include a high-voltage repeater 215, a high-voltage circuit breaker 217, a copper busbar, and an insulation fixing block 219. The high-voltage repeater 215, the high-voltage circuit breaker 217, the copper busbar, and the insulation fixing block 219 are provided in the enclosed space formed by the distribution-box lower housing 201 and the distribution-box upper cover 202.

The high-voltage repeater 215, the high-voltage circuit breaker 217, the copper busbar, and the open circuit trigger 111 are connected in series between the first high-voltage connector 203 and the second high-voltage connector 204.

In the embodiments of the present disclosure, the series connection order of the high-voltage repeater 215, the high-voltage circuit breaker 217, and the open circuit trigger 111 is not limited in the present disclosure.

As shown in FIG. 2, the open circuit trigger 111 further includes a main positive open circuit trigger 206 and a main negative open circuit trigger 207. Exemplarily, the high-voltage repeater 215, the high-voltage circuit breaker 217, the main positive copper busbar 209, and the main positive open circuit trigger 206 are connected in series between the first positive electricity connection terminal 211 of the first high-voltage connector 203 and the second positive electricity connection terminal 213 of the second high-voltage connector 204, and the main negative copper busbar 210 and the main negative open circuit trigger 207 are connected between the first negative electricity connection terminal 212 of the first high-voltage connector 203 and the second negative electricity connection terminal 214 of the second high-voltage connector 204.

In a normal operation state, the high-voltage battery ECU of the electric automobile sends, based on the operation situation of the electric automobile, a control signal to the high-voltage repeater 215 via the control line of the electric automobile. The low-voltage connector 205 is connected to the control line of the electric automobile and sends the control signal of the high-voltage repeater 215 to the high-voltage repeater 215. After receiving the control signal, the high-voltage repeater 215 disconnects the series connection of the first positive electricity connection terminal 211 and the second positive electricity connection terminal 213, thus disconnecting the connection between the positive electrode of the high-voltage battery of the electric automobile and the positive electrode of the high-voltage appliance.

When the high-voltage loop of the electric automobile is prone to a short circuit or the high-voltage appliance has an excess load, the high-voltage circuit breaker 217 disconnects the series connection of the first positive electricity connection terminal 211 and the second positive electricity connection terminal 213, thus disconnecting the positive high-voltage loop.

With the use of the high-voltage distribution box having an open circuit trigger of the embodiments of the present disclosure, when the electric automobile experiences a collision, the open circuit trigger immediately disconnects the positive high-voltage loop of the electric automobile and the negative high-voltage loop of the electric automobile, so that the high-voltage of the entire vehicle is powered down, reducing economic loss due to the collision of the electric automobile and human casualties.

FIG. 4 is a schematic structural diagram of a collision initiation system according to an embodiment of the present disclosure. The structure of the collision initiation system described in this figure includes a high-voltage distribution box 405 provided by the embodiments of the present disclosure, an airbag ECU 402, a collision sensor 403, and an airbag initiator 404.

The airbag ECU 402 is connected to the low-voltage connector of the high-voltage distribution box 405, and the collision sensor 403 and the airbag initiator 404 are respectively connected to the airbag ECU 402.

The airbag ECU 402 is configured to, after determining a collision status of the electric automobile based on a signal of the collision sensor 403 and a signal of the airbag initiator 404, send the initiation control signal to the low-voltage connector of the high-voltage distribution box 405.

In the embodiments of the present disclosure, when the electric automobile experiences a collision, the collision sensor 403 collects a collision signal and sends the collision signal to the airbag ECU 402. The airbag ECU 402 judges whether a collision occurs. If the collision occurs, an initiation control signal is sent to the open circuit trigger 407 of the high-voltage distribution box 405 via the control line of the electric automobile. The low-voltage connector of the high-voltage distribution box 405 is connected to the control line of the electric automobile and sends the initiation control signal to the open circuit trigger 407 of the high-voltage distribution box 405. After receiving the initiation control signal, the open circuit trigger 407 immediately disconnects the high-voltage battery 401 of the electric automobile from the high-voltage appliance 406, so that the high-voltage loop of the electric automobile is powered down.

In addition, when the electric automobile experiences a collision, the airbag initiator 404 quickly initiates the airbag of the automobile to reduce harm to passengers on the automobile. The airbag ECU 402 may further acquire the initiation status of the airbag initiator 404. When the airbag ECU 402 obtains the information of initiation of the airbag initiator 404, an initiation control signal is sent to the open circuit trigger 407 of the high-voltage distribution box 405 via the control line of the electric automobile. After receiving the initiation control signal, the open circuit trigger 407 immediately disconnects the high-voltage battery 401 of the electric automobile from the high-voltage appliance 406, so that the high-voltage loop of the electric automobile is powered down.

In the embodiments of the present disclosure, the airbag ECU 402 can determine the collision status of the collision sensor 403 and the initiation status of the airbag initiator 404 according to the method in the prior art, and details are not described in this specification.

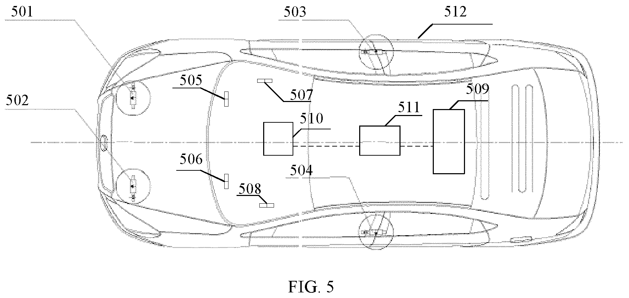

Exemplarily, as shown in FIG. 4, the collision sensor 403 further includes a left front collision sensor 408, a right front collision sensor 409, a left side collision sensor 410, a right side collision sensor 411, and a forward collision sensor 412, all of which are respectively mounted at different positions of the electric automobile as shown in FIG. 5, and configured to detect collision of the electric automobile in all directions to facilitate the airbag ECU 402 to control the initiation of the open circuit trigger 407 of the high-voltage distribution box 405, so that the high-voltage system of the entire vehicle is powered down. The airbag initiator 404 further includes a driver airbag initiator 413, a driver side airbag initiator 414, a passenger airbag initiator 415, and a passenger side airbag initiator 416, all of which are respectively mounted at different positions of the electric automobile as shown in FIG. 5 and configured to detect the initiation status of the airbag of the electric automobile in all directions to facilitate the airbag ECU 402 to control the initiation of the open circuit trigger 407 of the high-voltage distribution box 405, so that the high-voltage system of the entire vehicle is powered down. The driver airbag initiator 413, the driver side airbag initiator 414, the passenger airbag initiator 415, and the passenger side airbag initiator 416 in the embodiments of the present disclosure may be mounted based on hardware configurations of different car models or the needs of the vehicle owners.

FIG. 5 is a schematic structural diagram of an electric automobile according to an embodiment of the present disclosure. The structure of the electric automobile described in this figure includes the collision initiation system provided by the embodiments of the present disclosure, an automobile body 512, and a high-voltage battery 509.

The high-voltage battery 509 and the collision initiation system are provided inside the automobile body 512.

The high-voltage distribution box 511 having an open circuit trigger is connected to the high-voltage battery 509 and configured to control the high-voltage battery 509 to supply power to a high-voltage appliance of the automobile body 512.

In the embodiments of the present disclosure, the airbag ECU 510 sends an initiation control signal to the open circuit trigger of the high-voltage distribution box 511 based on a signal of the right front collision sensor 501, a signal of the left front collision sensor 502, a signal of the right side collision sensor 503, a signal of the left side collision sensor 504, a signal of the passenger airbag initiator 505, a signal of the driver airbag initiator 506, a signal of the passenger side airbag initiator 507, and a signal of the driver side airbag initiator 508. After receiving the initiation control signal, the open circuit trigger immediately disconnects the high-voltage loop of the entire vehicle.

The mounting positions of the right front collision sensor 501, the left front collision sensor 502, the right side collision sensor 503, the left side collision sensor 504, the passenger airbag initiator 505, the driver airbag initiator 506, the passenger side airbag initiator 507, and the driver side airbag initiator 508 may be shown in FIG. 5. The right front collision sensor 501 is configured to detect collision of the right front side of the automobile body 512, the left front collision sensor 502 is configured to detect collision of the left front side of the automobile body 512, the right side collision sensor 503 is configured to detect collision of the right side of the automobile body 512, and the left side collision sensor 504 is configured to detect collision of the left side of the automobile body 512. The passenger airbag initiator 505 is configured to detect initiation of the passenger airbag of the automobile body 512, the driver airbag initiator 506 is configured to detect initiation of the driver airbag of the automobile body 512, the passenger side airbag initiator 507 is configured to detect initiation of the passenger side airbag of the automobile body 512, and the driver side airbag initiator 508 is configured to detect initiation of the driver side airbag of the automobile body 512.

It should be understood that sequence numbers of processes in various embodiments of the present disclosure do not mean execution sequences. The execution sequences of the processes should be determined based on functions and internal logic of the processes, and should not be construed as any limitation on implementation processes of the embodiments of the the present disclosure.

The principle and the implementations of the present disclosure are described in this specification by using specific embodiments. The descriptions about the embodiments are merely provided to help understand the method and the core idea of the present disclosure.

## Claims

1. A high-voltage distribution box having an open circuit trigger, wherein a high-voltage battery (509) of an electric automobile is connected to a high-voltage appliance (406) of the electric automobile via the high-voltage distribution box, the high-voltage distribution box comprising
a distribution box housing (101), a first high-voltage connector (102, 203), a second high-voltage connector (103, 204), a low-voltage connector (104, 205), and the open circuit trigger (111, 407); wherein
the first high-voltage connector (102, 203), the second high-voltage connector (103, 204), and the low-voltage connector (104, 205) are provided on a surface of the distribution box housing (101), and the open circuit trigger (111, 407) is provided inside the distribution box housing (101);
the first high-voltage connector (102, 203) and the second high-voltage connector (103, 204) are connected to a high-voltage loop of the
electric automobile, and the first high-voltage connector (102, 203) and the second high-voltage connector (103, 204) are connected in series via the open circuit trigger (111, 407); and
the low-voltage connector (104, 205) is connected to a control line of the electric automobile and configured to send an initiation control signal to the open circuit trigger (111, 407) at a moment of collision,
**characterized in that**
the low-voltage connector (104, 205) is configured to send the initiation control signal to the open circuit trigger (111, 407);
wherein the open circuit trigger (111, 407) further comprises a connecting pin (301) and a trigger (302), and the connecting pin (301) is movably connected between a first end of the open circuit trigger (306) and a second end thereof;
the trigger (302) is provided at an end of the connecting pin (301), connected to the low-voltage connector (104, 205), and configured to receive the initiation control signal,
the trigger (302) further comprises a trigger resistor (303) and an expansion component (304), the trigger resistor (303) is connected to the low-voltage connector (104, 205), the expansion component (304) is provided at an end of the connecting pin (301), and the expansion component (304) is a gas generator; and
the trigger resistor (303) is configured to, upon receipt of the initiation control signal, control the expansion component (304) to swell and deform to enable the connecting pin (301) to disconnect the connection between the first end of the open circuit trigger (306) and the second end thereof, so as to immediately disconnect the
series connection of the first high-voltage connector (102, 203) and the second high-voltage connector (103, 204), thus disconnecting the high-voltage battery (509) of the electric automobile from the high-voltage appliance (406).

2. The high-voltage distribution box having the open circuit trigger according to claim 1, wherein the first high-voltage connector (102, 203) comprises a first positive electricity connection terminal (107, 211) and a first negative electricity connection terminal (108, 212), the second high-voltage connector (103, 204) comprises a second positive electricity connection terminal (109, 213) and a second negative electricity connection terminal (110,214), and the open circuit trigger (111, 407) further comprises a main positive open circuit trigger (105, 206) and a main negative open circuit trigger (106, 207); wherein
the main positive open circuit trigger (105, 206) is connected in series between the first positive electricity connection terminal (107, 211) and the second positive electricity connection terminal (109, 213), and the main negative open circuit trigger (106, 207) is connected in series between the first negative electricity connection terminal (108, 212) and the second negative electricity connection terminal (110,214).

3. The high-voltage distribution box having the open circuit trigger according to claim 1, wherein the high-voltage distribution box (405, 511) further comprises a high-voltage repeater (215), and the high-voltage repeater (215) is provided inside the distribution box housing (101);
the high-voltage repeater (215) and the open circuit trigger (111, 407) are connected in series between the first high-voltage connector (102, 203) and the second high-voltage connector (103, 204); and
the low-voltage connector (104, 205) is further configured to, in a normal operation state, receive a control signal sent to the high-voltage repeater (215).

4. The high-voltage distribution box having the open circuit trigger according to claim 1, wherein the high-voltage distribution box (405, 511) further comprises a high-voltage circuit breaker (217) and the high-voltage circuit breaker (217) is provided inside the distribution box housing (101);
the high-voltage open circuit trigger and the open circuit trigger (111, 407) are connected in series between the first high-voltage connector (102, 203) and the second high-voltage connector (103, 204); and
the high-voltage open circuit trigger is configured to disconnect the series connection of the first high-voltage connector (102, 203) and the second high-voltage connector (103, 204) in a case of a short circuit in the high-voltage loop of the electric automobile or an excess load of the electric automobile.

5. The high-voltage distribution box having open circuit trigger according to claim 1, wherein the high-voltage distribution box (405, 511) further comprises a copper busbar and an insulation fixing block (219), and the copper busbar and the insulation fixing block (219) are provided inside the distribution box housing (101);
the copper busbar and the open circuit trigger (111, 407) are connected in series between the first high-voltage connector (102, 203) and the second high-voltage connector (103, 204), to conduct a high-voltage current between the first high-voltage connector (102, 203) and the second high-voltage connector (103, 204) inside the distribution box housing (101); and
the insulation fixing block (219) wraps the copper busbar and is configured to fix the copper busbar inside the distribution box housing (101).

6. A collision initiation system, comprising the high-voltage distribution box (405, 511) having the open circuit trigger according to any one of claims 1 to 5, an airbag ECU (402, 510), a collision sensor (403), and an airbag initiator (404); wherein
the airbag ECU (402, 510) is connected to the low-voltage connector (104, 205) of the high-voltage distribution box (405, 511) having the open circuit trigger (111, 407), and the collision sensor (403) and the airbag initiator (404) are respectively connected to the airbag ECU (402, 510); and
the airbag ECU (402, 510) is configured to, after determining a collision status of an electric automobile based on a signal of the collision sensor (403) and a signal the airbag initiator (404), send the initiation control signal to the low-voltage connector (104, 205) of the high-voltage distribution box (405, 511) having the open circuit trigger (111, 407).

7. An electric automobile, comprising the collision initiation system according to claim 6, an automobile body (512), and the high-voltage battery (401, 509); wherein
the high-voltage battery (401, 509) and the collision initiation system are provided inside the automobile body (512); and
the high-voltage distribution box (405, 511) having the open circuit trigger (111, 407) is connected to the high-voltage battery (401, 509) and configured to control the high-voltage battery (401, 509) to supply power to the high-voltage appliance (406) of the automobile body (512).

## Patentansprüche

1. Hochspannungsverteilerkasten mit einem Unterbrechungsauslöser, wobei eine Hochspannungsbatterie (509) eines Elektrofahrzeugs über den Hochspannungsverteilerkasten mit einem Hochspannungsgerät (406) des Elektrofahrzeugs verbunden ist, wobei der Hochspannungsverteilerkasten aufweist:
ein Verteilerkastengehäuse (101), einen ersten Hochspannungsanschluss (102, 203), einen zweiten Hochspannungsanschluss (103, 204), einen Niederspannungsanschluss (104, 205) und den Unterbrechungsauslöser (111, 407); wobei
der erste Hochspannungsanschluss (102, 203), der zweite Hochspannungsanschluss (103, 204) und der Niederspannungsanschluss (104, 205) an einer Oberfläche des Verteilerkastengehäuses (101) vorgesehen sind und der Unterbrechungsauslöser (111, 407) innerhalb des Verteilerkastengehäuses (101) vorgesehen ist;
der erste Hochspannungsanschluss (102, 203) und der zweite Hochspannungsanschluss (103, 204) mit einer Hochspannungsschleife des Elektrofahrzeugs verbunden sind und der erste Hochspannungsanschluss (102, 203) und der zweite Hochspannungsanschluss (103, 204) über den Unterbrechungsauslöser (111, 407) in Reihe geschaltet sind; und
der Niederspannungsanschluss (104, 205) mit einer Steuerleitung des Elektrofahrzeugs verbunden und so konfiguriert ist, dass er im Moment einer Kollision ein Auslösesteuersignal an den Unterbrechungsauslöser (111, 407) sendet,
**dadurch gekennzeichnet, dass**
der Niederspannungsanschluss (104, 205) so konfiguriert ist, dass er das Auslösesteuersignal an den Unterbrechungsauslöser (111, 407) sendet;
wobei der Unterbrechungsauslöser (111, 407) ferner einen Verbindungsstift (301) und einen Auslöser (302) aufweist und der Verbindungsstift (301) beweglich zwischen einem ersten Ende des Unterbrechungsauslösers (306) und einem zweiten Ende desselben verbunden ist;
der Auslöser (302) an einem Ende des Verbindungsstifts (301) vorgesehen ist, mit dem Niederspannungsanschluss (104, 205) verbunden ist und so konfiguriert ist, dass er das Auslösesteuersignal empfängt,
der Auslöser (302) ferner einen Auslösewiderstand (303) und eine Ausdehnungskomponente (304) aufweist, der Auslösewiderstand (303) mit dem Niederspannungsanschluss (104, 205) verbunden ist, die Ausdehnungskomponente (304) an einem Ende des Verbindungsstifts (301) vorgesehen ist und die Ausdehnungskomponente (304) ein Gasgenerator ist; und
der Auslösewiderstand (303) so konfiguriert ist, dass er bei Empfang des Auslösesteuersignals die Ausdehnungskomponente (304) so steuert, dass sie sich ausdehnt und verformt, damit der Verbindungsstift (301) die Verbindung zwischen dem ersten Ende des Unterbrecherauslösers (306) und dessen zweitem Ende trennt, um die Reihenschaltung des ersten Hochspannungsanschlusses (102, 203) und des zweiten Hochspannungsanschlusses (103, 204) sofort zu trennen und somit die Hochspannungsbatterie (509) des Elektrofahrzeugs vom Hochspannungsgerät (406) zu trennen.

2. Hochspannungsverteilerkasten mit dem Unterbrechungsauslöser gemäß Anspruch 1, bei dem der erste Hochspannungsanschluss (102, 203) ein erstes positives Stromanschlussterminal (107, 211) und ein erstes negatives Stromanschlussterminal (108, 212) aufweist, der zweite Hochspannungsanschluss (103, 204) ein zweites positives Stromanschlussterminal (109, 213) und ein zweites negatives Stromanschlussterminal (110, 214) aufweist, und der Unterbrechungsauslöser (111, 407) ferner einen positiven Hauptunterbrechungsauslöser (105, 206) und einen negativen Hauptunterbrechungsauslöser (106, 207) aufweist; wobei
der positive Hauptunterbrechungsauslöser (105, 206) in Reihe zwischen dem ersten positiven Stromanschlussterminal (107, 211) und dem zweiten positiven Stromanschlussterminal (109, 213) geschaltet ist, und der negative Hauptunterbrechungsauslöser (106, 207) in Reihe zwischen dem ersten negativen Stromanschlussterminal (108, 212) und dem zweiten negativen Stromanschlussterminal (110, 214) geschaltet ist.

3. Hochspannungsverteilerkasten mit dem Unterbrechungsauslöser gemäß Anspruch 1, bei dem der Hochspannungsverteilerkasten (405, 511) ferner einen Hochspannungs-Repeater (215) aufweist und der Hochspannungs-Repeater (215) innerhalb des Verteilerkastengehäuses (101) vorgesehen ist;
der Hochspannungs-Repeater (215) und der Unterbrechungsauslöser (111, 407) in Reihe zwischen dem ersten Hochspannungsanschluss (102, 203) und dem zweiten Hochspannungsanschluss (103, 204) geschaltet sind; und
der Niederspannungsanschluss (104, 205) ferner so konfiguriert ist, dass er in einem normalen Betriebszustand ein an den Hochspannungs-Repeater (215) gesendetes Steuersignal empfängt.

4. Hochspannungsverteilerkasten mit dem Unterbrechungsauslöser gemäß Anspruch 1, bei dem der Hochspannungsverteilerkasten (405, 511) ferner einen Hochspannungsleistungsschalter (217) aufweist und der Hochspannungsleistungsschalter (217) innerhalb des Verteilerkastengehäuses (101) vorgesehen ist;
der Hochspannungsunterbrechungsauslöser und der Unterbrechungsauslöser (111, 407) in Reihe zwischen dem ersten Hochspannungsanschluss (102, 203) und dem zweiten Hochspannungsanschluss (103, 204) geschaltet sind; und
der Hochspannungsauslöser so konfiguriert ist, dass er die Reihenschaltung des ersten Hochspannungsanschlusses (102, 203) und des zweiten Hochspannungsanschlusses (103, 204) im Falle eines Kurzschlusses in der Hochspannungsschleife des Elektrofahrzeugs oder einer Überlastung des Elektrofahrzeugs trennt.

5. Hochspannungsverteilerkasten mit einem Unterbrechungsauslöser gemäß Anspruch 1, bei dem der Hochspannungsverteilerkasten (405, 511) ferner eine Kupferstromschiene und einen Isolierbefestigungsblock (219) aufweist und die Kupferstromschiene und der Isolierbefestigungsblock (219) innerhalb des Verteilerkastengehäuses (101) vorgesehen sind;
die Kupferstromschiene und der Unterbrechungsauslöser (111, 407) zwischen dem ersten Hochspannungsanschluss (102, 203) und dem zweiten Hochspannungsanschluss (103, 204) in Reihe geschaltet sind, um einen Hochspannungsstrom zwischen dem ersten Hochspannungsanschluss (102, 203) und dem zweiten Hochspannungsanschluss (103, 204) innerhalb des Verteilerkastengehäuses (101) zu leiten; und
der Isolierbefestigungsblock (219) die Kupferstromschiene umhüllt und so konfiguriert ist, dass er die Kupferstromschiene innerhalb des Verteilerkastengehäuses (101) befestigt.

6. Kollisionsauslösesystem, aufweisend den Hochspannungsverteilerkasten (405, 511) mit dem Unterbrechungsauslöser gemäß einem der Ansprüche 1 bis 5, eine Airbag-ECU (402, 510), einen Kollisionssensor (403) und einen Airbag-Auslöser (404); wobei
die Airbag-ECU (402, 510) mit dem Niederspannungsanschluss (104, 205) des Hochspannungsverteilerkastens (405, 511) mit dem Unterbrechungsauslöser (111, 407) verbunden ist, und der Kollisionssensor (403) und der Airbag-Auslöser (404) jeweils mit der Airbag-ECU (402, 510) verbunden sind; und
die Airbag-ECU (402, 510) so konfiguriert ist, dass sie nach der Ermittlung eines Kollisionsstatus eines Elektrofahrzeugs auf der Grundlage eines Signals des Kollisionssensors (403) und eines Signals des Airbag-Auslösers (404), das Auslösesteuersignal an den Niederspannungsanschluss (104, 205) des Hochspannungsverteilerkastens (405, 511) mit dem Unterbrechungsauslöser (111, 407) sendet.

7. Elektrofahrzeug, aufweisend das Kollisionsauslösesystem gemäß Anspruch 6, eine Fahrzeugkarosserie (512) und die Hochspannungsbatterie (401, 509), wobei
die Hochspannungsbatterie (401, 509) und das Kollisionsauslösesystem innerhalb der Fahrzeugkarosserie (512) vorgesehen sind; und
der Hochspannungsverteilerkasten (405, 511) mit dem Unterbrechungsauslöser (111, 407) mit der Hochspannungsbatterie (401, 509) verbunden und so konfiguriert ist, dass er die Hochspannungsbatterie (401, 509) so steuert, dass sie das Hochspannungsgerät (406) der Fahrzeugkarosserie (512) mit Strom versorgt.

## Revendications

1. Boîte de distribution à haute tension avec un déclencheur d'interruption, dans lequel une batterie haute tension (509) d'un véhicule électrique est reliée à un appareil haute tension (406) du véhicule électrique via le boîte de distribution haute tension, le boîte de distribution haute tension comprenant:
un boîtier de boîte de distribution (101), une première connexion haute tension (102, 203), une deuxième connexion haute tension (103, 204), une connexion basse tension (104, 205) et le déclencheur d'interruption (111, 407); dans lequel
la première connexion haute tension (102, 203), la deuxième connexion haute tension (103, 204) et la connexion basse tension (104, 205) sont prévus sur une surface du boîtier de boîte de distribution (101) et le déclencheur d'interruption (111, 407) est prévu à l'intérieur du boîtier de boîte de distribution (101);
la première connexion haute tension (102, 203) et la deuxième connexion haute tension (103, 204) sont connectés à une boucle haute tension du véhicule électrique, et la première connexion haute tension (102, 203) et deuxième connexion haute tension (103, 204) sont connectés en série via le déclencheur d'interruption (111, 407); et
la connexion basse tension (104, 205) est relié à une ligne de commande du véhicule électrique et est configuré de manière à envoyer un signal de commande de déclenchement au déclencheur d'interruption (111, 407) au moment d'une collision,
**caractérisé en ce que**
la connexion basse tension (104, 205) est configuré de manière à envoyer le signal de commande de déclenchement au déclencheur d'interruption (111, 407);
le déclencheur d'interruption (111, 407) comprenant en outre une tige de connexion (301) et un déclencheur (302), la tige de connexion (301) étant reliée de manière mobile entre une première extrémité du déclencheur d'interruption (306) et une deuxième extrémité de celui-ci;
le déclencheur (302) est prévu à une extrémité de la tige de liaison (301), est relié à la connexion basse tension (104, 205) et est configuré pour recevoir le signal de commande de déclenchement,
le déclencheur (302) comprend en outre une résistance de déclenchement (303) et un composant d'extension (304), la résistance de déclenchement (303) est reliée à la connexion basse tension (104, 205), le composant d'expansion (304) est prévu à une extrémité de la tige de connexion (301) et le composant d'expansion (304) est un générateur de gaz; et
la résistance de déclenchement (303) est configurée de manière à commander, à la réception du signal de commande de déclenchement, le composant d'expansion (304) pour qu'il se dilate et se déforme afin que la tige de connexion (301) sépare la connexion entre la première extrémité du déclencheur d'interruption (306) et sa deuxième extrémité afin de déconnecter immédiatement le montage en série de la première connexion haute tension (102, 203) et de la deuxième connexion haute tension (103, 204) et de déconnecter ainsi la batterie haute tension (509) du véhicule électrique de l'appareil haute tension (406).

2. Boîte de distribution à haute tension avec un déclencheur d'interruption selon la revendication 1, dans lequel la première connexion haute tension (102, 203) comprend une première borne de connexion de courant positive (107, 211) et une première borne de connexion de courant négative (108, 212), la deuxième connexion haute tension (103, 204) comporte une deuxième borne de connexion de courant positive (109, 213), et le déclencheur d'interruption (111, 407) comprend en outre un déclencheur d'interruption principal positif (105, 206) et un déclencheur d'interruption principal négatif (106, 207); dans lequel
le déclencheur d'interruption principal positif (105, 206) est connecté en série entre la première borne de connexion de courant positif (107, 211) et la deuxième borne de connexion de courant positive (109, 213), et le déclencheur d'interruption principal négatif (106, 207) est connecté en série entre la première borne de connexion de courant négative (108, 212) et la deuxième borne de connexion de courant négative (110, 214).

3. Boîte de distribution à haute tension avec un déclencheur d'interruption selon la revendication 1, dans lequel le boîte de distribution haute tension (405, 511) comprend en outre un répéteur haute tension (215) et le répéteur haute tension (215) est prévu à l'intérieur du boîtier de boîte de distribution (101);
le répéteur haute tension (215) et le déclencheur d'interruption (111, 407) sont connectés en série entre la première connexion haute tension (102, 203) et la deuxième connexion haute tension (103, 204); et
la connexion basse tension (104, 205) est en outre configurée pour recevoir, dans un état de fonctionnement normal, un signal de commande envoyé au répéteur haute tension (215).

4. Boîte de distribution à haute tension avec un déclencheur d'interruption selon la revendication 1, dans lequel le boîte de distribution haute tension (405, 511) comprend en outre un disjoncteur haute tension (217) et le disjoncteur haute tension (217) est prévu à l'intérieur du boîtier de boîte de distribution (101);
le déclencheur d'interruption haute tension et le déclencheur d'interruption (111, 407) sont connectés en série entre la première connexion haute tension (102, 203) et la deuxième connexion haute tension (103, 204); et
le déclencheur d'interruption haute tension est configuré pour déconnecter le montage en série de la première connexion haute tension (102, 203) et de la deuxième connexion haute tension (103, 204) en cas de court-circuit dans la boucle haute tension du véhicule électrique ou de surcharge du véhicule électrique.

5. Boîte de distribution à haute tension avec un déclencheur d'interruption selon la revendication 1, dans lequel le boîte de distribution haute tension (405, 511) comprend en outre une barre conductrice en cuivre et un bloc de fixation isolant (219), et la barre conductrice en cuivre et le bloc de fixation isolant (219) sont prévus à l'intérieur du boîtier de boîte de distribution (101);
la barre conductrice en cuivre et le déclencheur d'interruption (111, 407) sont connectés en série entre la première connexion haute tension (102, 203) et la deuxième connexion haute tension (103, 204) afin de conduire un courant haute tension entre la première connexion haute tension (102, 203) et la deuxième connexion haute tension (103, 204) à l'intérieur du boîtier de boîte de distribution (101); et
le bloc de fixation isolant (219) enveloppe la barre conductrice en cuivre et est configuré pour fixer la barre conductrice en cuivre à l'intérieur du boîtier de boîte de distribution (101).

6. Système de déclenchement en cas de collision, comprenant le boîte de distribution à haute tension (405, 511) avec un déclencheur d'interruption selon l'une des revendications 1 à 5, un ECU d'airbag (402, 510), un capteur de collision (403) et un déclencheur d'airbag (404); dans lequel
l'ECU d'airbag (402, 510) est connecté au connecteur basse tension (104, 205) du boîte de distribution haute tension (405, 511) avec le déclencheur d'interruption (111, 407), et le capteur de collision (403) et le déclencheur d'airbag (404) sont chacun connectés à l'ECU d'airbag (402, 510); et
l'ECU d'airbag (402, 510) est configuré de manière à ce qu'après avoir déterminé un état de collision d'un véhicule électrique sur la base d'un signal provenant du capteur de collision (403) et d'un signal provenant du déclencheur d'airbag (404), envoie le signal de commande de déclenchement à la connexion basse tension (104, 205) du boîte de distribution haute tension (405, 511) avec le déclencheur d'interruption (111, 407).

7. Véhicule électrique comprenant le système de déclenchement en cas de collision selon la revendication 6, une carrosserie de véhicule (512) et la batterie haute tension (401, 509), dans lequel
la batterie haute tension (401, 509) et le système de déclenchement en cas de collision sont prévus à l'intérieur de la carrosserie du véhicule (512); et
le boîte de distribution haute tension (405, 511) est connecté au déclencheur d'interruption (111, 407) avec la batterie haute tension (401, 509) et est configuré pour commander la batterie haute tension (401, 509) afin qu'elle alimente l'appareil haute tension (406) de la carrosserie du véhicule (512).
